# EUROPÄISCHE PATENTSCHRIFT

(11) **EP 1 126 476 B1**
(45) Veröffentlichungstag und Bekanntmachung des Hinweises auf die Patenterteilung: **27.08.2003**
(21) Anmeldenummer: 01102408.0
(22) Anmeldetag: 02.02.2001
(51) Int. Cl.: G21C 17/10

(54) **Kernreaktor mit Instrumentierungsfinger**
Nuclear reactor with instrumentation thimble tube
Réacteur nucléaire équipé d'un doigt de gant d'instrumentation

(30) Priorität: 14.02.2000 DE 10006470
(43) Veröffentlichungstag der Anmeldung: 22.08.2001
(73) Patentinhaber: Framatome ANP GmbH, 91050 Erlangen (DE)
(72) Erfinder: Zuch, Gerhard, Dipl.-Ing., 90766 Fürth (DE)
(74) Vertreter: Tergau & Pohl Patentanwälte

(56) Entgegenhaltungen:
- EP-A- 0 346 170
- DE-A- 2 832 122
- FR-A- 2 081 077
- FR-A- 2 607 309
- FR-A- 2 707 418

## Beschreibung

Die Erfindung betrifft einen Kernreaktor, insbesondere einen Druckwasserreaktor, mit mindestens einem Instrumentierungsfinger, in dem als Teil eines Kugelmesssystems ein Teilstück eines Rohres angeordnet ist.

Ein Instrumentierungsfinger ist ein Teil einer Instrumentierungslanze. Eine solche Instrumentierungslanze besteht in der Regel aus mindestens einem Lanzenschaft, einem Lanzenjoch und mindestens einem Instrumentierungsfinger.

In einem üblichen Instrumentierungsfinger für einen Druckwasserreaktor sind üblicherweise mehrere Messsysteme vertreten, zu denen auch ein Kugelmesssystem gehört. In einem solchen Instrumentierungsfinger können auch Neutronenflussdetektoren oder Thermoelemente untergebracht sein. Üblicherweise sind Kabel und Rohre der verschiedenen Messsysteme über ein Lanzenjoch und einen Lanzenschaft aus dem Reaktordruckbehälter des Reaktors herausgeführt.

Bisher war es üblich, nur solche Messsystemteile, die über elektrische Leitungen angeschlossene Sensoren enthalten, austauschbar in einem Instrumentierungsfinger anzuordnen. Die Rohre des Kugelmesssystems waren bisher nicht austauschbar, da man stets davon ausging, dass die Rohre nur sehr aufwendig zu trennen sind und fast keinem Verschleiß unterliegen. Falls durch Schwingungsbeanspruchungen während des Reaktorbetriebes, bei der Handhabung während einer Revision oder auch beim Austauschen anderer Messsystemteile eine Beschädigung an einem Rohr des Kugelmesssystems auftrat, war es bisher erforderlich, die gesamte Instrumentierungslanze mit allen in ihr vorhandenen Messsystemteilen auszutauschen. Der Wert einer solchen kompletten Instrumentierungslanze beträgt ca. DM 500.000,-. Neben den Kosten für den Austausch ist auch zu beachten, dass bei der Entsorgung einer vollständigen Instrumentierungslanze ca. 150 kg strahlendes Material anfallen.

Der Erfindung liegt daher die Aufgabe zugrunde, einen Kernreaktor anzugeben, bei dem ein Austausch kompletter Instrumentierungslanzen nicht mehr notwendig ist.

Die Aufgabe wird gemäß der Erfindung dadurch gelöst, dass das Rohr außerhalb des Instrumentierungsfingers zwei Trennstellen aufweist, so dass vom Rohr das Teilstück, das im Instrumentierungsfinger angeordnet ist, allein austauschbar ist.

Damit wird der Vorteil erzielt, dass bei einem Defekt an einem Rohr des Kugelmesssystems innerhalb des Instrumentierungsfingers nur das Teilstück des Rohres, das dem Instrumentierungsfinger unmittelbar zugeordnet ist, ausgetauscht werden kann. Die radioaktive Abfallmenge, die entsorgt werden muss, beträgt dann nur ca. 2 % der beim bekannten Verfahren anfallenden Menge. Darüber hinaus ist der Kostenaufwand für den Austausch eines Kugelmesssystemrohres nur ca. 20 % desjenigen Kostenaufwandes, der für den kompletten Austausch einer Instrumentierungslanze aufgebracht werden muss.

Beispielsweise ist gemeinsam mit dem Teilstück des Rohres der Instrumentierungsfinger austauschbar. Das ist sinnvoll, wenn auch die Hülle des Instrumentierungsfingers defekt sein sollte.

Falls der Instrumentierungsfinger in einem Lanzenjoch gehalten ist, das sich im Inneren eines Reaktordruckbehälters des Kernreaktors befindet, sind die Trennstellen beispielsweise am Lanzenjoch angeordnet. Am Lanzenjoch können die Trennstellen zuverlässig positioniert werden und sind dort im mittleren Bereich der Instrumentierungslanze leicht zugänglich. Dadurch kann nach einem Abtrennen eines Teilstückes des Rohres ein neues Teilstück zuverlässig wieder angefügt werden.

Jede Trennstelle, die zwei Abschnitte des Rohres trennt, weist beispielsweise ein Aufnahmestück am einen Abschnitt des Rohres und eine zugeordnete Überwurfmutter am zugeordneten anderen Abschnitt des Rohres auf. Dadurch können leicht wieder lösbare Verschraubungen zwischen den beiden Abschnitten aufgebaut werden.

Beispielsweise befindet sich am Aufnahmestück ein plastisch verformbarer Napf, der die Überwurfmutter übergreifend eine Aufdrehsicherung bildet. Diese verhindert eine ungewolltes Öffnen der Verbindung, lässt aber durch eine Kombination von Ziehen und Drehen ein Öffnen für das Auswechseln des Teilstückes des Rohres aus dem Instrumentierungsfinger zu.

Der Napf kann dazu plastisch verformbare Laschen aufweisen, die in Schlitze eingreifen können, die sich auf der Außenfläche der Überwurfmutter befinden.

Beispielsweise ist der eine Abschnitt des Rohres mit dem Aufnahmestück verschweißt. Zwischen dem zugeordneten Abschnitt des Rohres und dem Aufnahmestück ist im Bereich der Überwurfmutter z.B. ein Dichtring anbringbar.

Sowohl durch die Verschweißung als auch durch den Dichtring wird eine zuverlässige, dichte Verbindung der beiden Abschnitte vorteilhafterweise ermöglicht.

Zwischen der Überwurfmutter und dem Dichtring ist beispielsweise eine Distanzhülse anbringbar. Dadurch'ergibt sich eine elastische und damit besonders dichte Verbindung der beiden Rohrabschnitte, die durch Schlitze in der Überwurfmutter weiter verbessert werden kann.

Die genannten Vorrichtungen zum Verbinden von zwei Abschnitten eines Rohres an einer Trennstelle, insbesondere der plastisch verformbare Napf und der Dichtring, halten den hohen Beanspruchungen eines Kernreaktors stand. Weder hohe äußere Drücke, über 150 bar (1,5·10⁶Pa), noch Temperaturen von ca. 320 °C, noch Schwingungen des gesamten Systems beeinträchtigen die Haltbarkeit der Verbindungsvorrichtungen. Aufgrund dieser Vorrichtungen kann ein in einer Instrumentierungslanze angeordnetes Rohrteilstück eines Kugelmesssystems alleine oder gemeinsam mit dem Instrumentierungsfinger ausgetauscht werden. Ein Austausch der teueren kompletten Instrumentierungslanze ist dann nicht oder nur noch selten notwendig.

Ein Beispiel für einen Kernreaktor mit einem Instrumentierungsfinger nach der Erfindung wird anhand der Zeichnung näher erläutert:
FIG 1 zeigt in einem Reaktordruckbehälter die Position eines von mehreren Instrumentierungsfingern.
FIG 2 zeigt den Verlauf eines Rohres für das Kugelmesssystem im Lanzenjoch.
FIG 3 zeigt eine Trennstelle am Rohr des Kugelmesssystems.

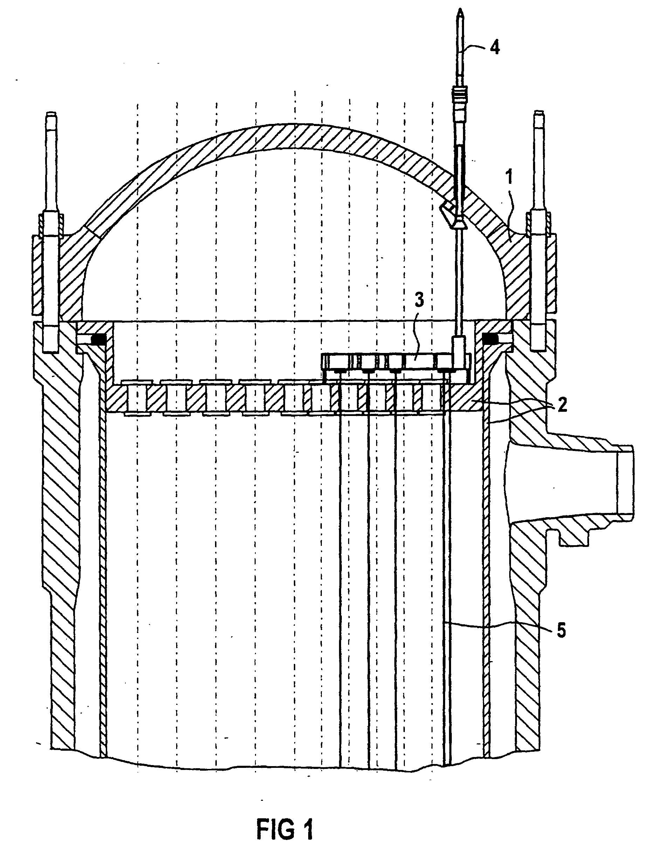

Figur 1 zeigt einen Reaktordruckbehälter 1, in dem ein Kerngerüst 2 angeordnet ist. Auf diesem Kerngerüst 2 ist ein Lanzenjoch 3 gehalten, von dem aus ein Lanzenschaft 4 aus dem Reaktordruckbehälter 1 herausgeführt ist. Vom Lanzenjoch 3 erstrecken sich in das Innere des Reaktordruckbehälters 1 hinein mehrere Instrumentierungsfinger.

In einem solchen Instrumentierungsfinger befinden sich z.B. mehrere, nicht dargestellte Messsonden, von denen elektrische Leitungen zu einer Auswerteeinheit führen. Diese elektrischen Leitungen weisen Steckverbindungen auf, so dass die Sonden bei Bedarf einzeln ausgetauscht werden können.

In einem bestimmten Instrumentierungsfinger 5 ist als Teil eines Kugelmesssystems ein Rohr 6 angeordnet, das in Figur 1 nicht gezeigt ist. Das als solche bekannte Kugelmesssystem sieht vor, dass durch das Rohr 6, das bis in den Reaktorkern hineinführt, Kugeln, z.B. aus Metall, geleitet werden. Diese Kugeln werden, wenn sie aus dem Reaktorkern zurück sind, auf ihre Radioaktivität hin untersucht.

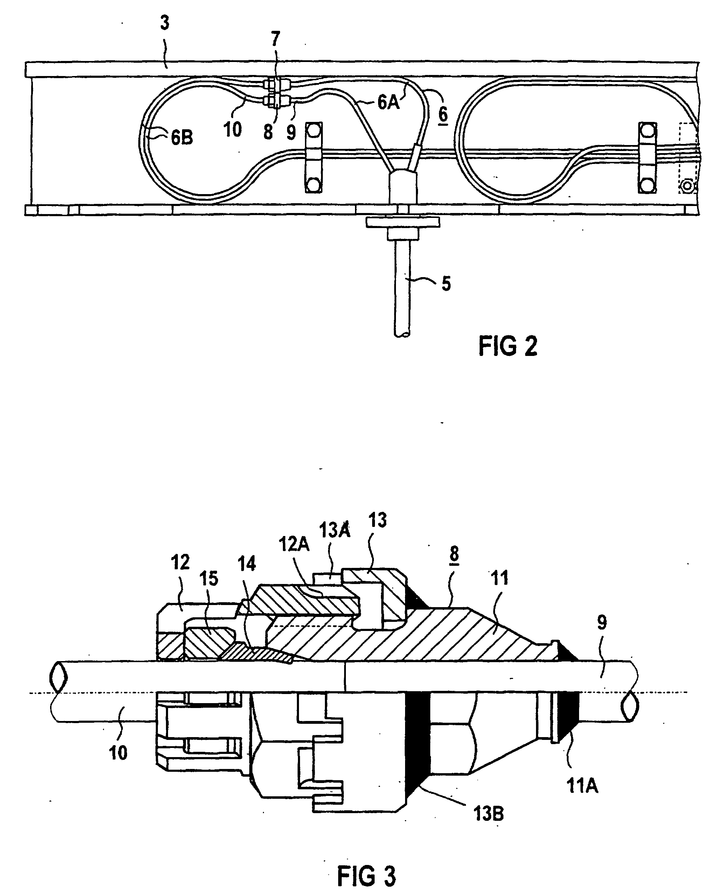

Figur 2 zeigt einen Instrumentierungsfinger 5, in dem ein Teilstück 6A des Rohres 6 einstückig hin und her geführt ist. Der Rest 6B des Rohres 6 ist einen Kreislauf bildend über zwei Trennstellen 7, 8, die sich außerhalb des Instrumentierungsfingers 5 am Lanzenjoch 3 befinden, mit den beiden Enden des Teilstückes 6A verbunden. Sollte das Teilstück 6A des Rohres 6, das zum größten Teil im Instrumentierungsfinger 5 verläuft, defekt sein, kann dieses Teilstück 6A einzeln oder gemeinsam mit dem Instrumentierungsfinger 5 ausgetauscht werden. Dazu werden die Trennstellen 7, 8 geöffnet, das defekte Teilstück 6A wird entfernt und z.B. nach dem Einfügen eines Ersatzteilstückes in den Instrumentierungsfinger 5 werden die beiden Enden dieses Ersatzteilstückes an den Trennstellen 7, 8 mit dem Rest 6B des Rohres 6 verbunden. Das Teilstück 6A kann auch gemeinsam mit dem Instrumentierungsfinger 5 ausgetauscht werden.

Figur 3 zeigt Details der in Figur 2 gezeigten Trennstelle 8 zum Verbinden und Trennen von zwei Rohrabschnitten 9 und 10. Mit dem einen Abschnitt 9 des Rohres 6 ist ein Aufnahmestück 11 durch eine Schweißverbindung 11A verschweißt, während der zugeordnete andere Abschnitt 10 des Rohres 6 eine Überwurfmutter 12 aufweist. Am Aufnahmestück 11 ist ein Napf 13, der plastisch verformbare Laschen 13A aufweist, durch eine Schweißverbindung 13B angeschweißt. Eine dieser Laschen 13A ist in der Schließstellung in entsprechend angebrachte Schlitze 12A in der Überwurfmutter 12 eingebogen und verhindert ein ungewolltes Öffnen.

Die Anzahl der Laschen 13A am Napf 13 und der Schlitze 12A in der Überwurfmutter 12 ist z.B. um mindestens 1 verschieden, damit stets eine günstige Paarung von Lasche 13A und Schlitz 12A gegeben ist.

Das Aufnahmestück 11 ist mit dem ihm zugeordneten Rohrabschnitt 9 verschweißt. Eine dichte Verbindung mit dem anderen Rohrabschnitt 10 ist durch einen Dichtring 14 gewährleistet, der zwischen dem Aufnahmestück 11 und diesem Rohrabschnitt 10 im Bereich der Überwurfmutter 12 angeordnet ist und beim Anbringen der Überwurfmutter 12 deformiert wird. Es wird eine Abdichtung des Aufnahmestückes 11 zum Rohrabschnitt 10 gewährleistet.

Eine zwischen dem Dichtring 14 und der Überwurfmutter 12 angeordnete Distanzhülse 15 verlängert die Überwurfmuter 12, so dass eine elastische dichte Verbindung zwischen den beiden Rohrabschnitten 9 und 10 besser möglich ist. Die Überwurfmutter 12 ist zusätzlich so geschlitzt, dass nur einige Stäbe vorhanden sind. Solche verhältnismäßig langen dünnen Stäbe übernehmen die Funktion einer Dehnschraube und gewährleisten so die Dichtheit der Verbindung auch bei erhöhtem Drucken und Temperaturen.

Mit den Trennstellen 7, 8 wird der Vorteil erzielt, dass das in einem Instrumentierungsfinger 5 angeordnete Teilstück 6A des Rohres 6 eines Kugelmesssystems einzeln oder gemeinsam mit dem Instrumentierungsfinger 5 ausgetauscht werden kann.

## Patentansprüche

1. Kernreaktor, insbesondere Druckwasserreaktor, mit mindestens einem Instrumentierungsfinger (5), in dem als Teil eines Kugelmesssystems ein Teilstück (6A) eines Rohres (6) angeordnet ist,
**dadurch gekennzeichnet, dass** das Rohr (6) außerhalb des Instrumentierungsfingers (5) zwei Trennstellen (7, 8) aufweist, so dass vom Rohr (6) das Teilstück (6A) allein austauschbar ist.

2. Kernreaktor nach Anspruch 1,
**dadurch gekennzeichnet, dass** gemeinsam mit dem Teilstück (6A) des Rohres (6) der Instrumentierungsfinger (5) austauschbar ist.

3. Kernreaktor nach einem der Ansprüche 1 oder 2, wobei der Instrumentierungsfinger (5) in einem Lanzenjoch (3) gehalten ist, das im Inneren eines Reaktordruckbehälters (1) angeordnet ist,
**dadurch gekennzeichnet, dass** die Trennstellen (7, 8) am Lanzenjoch (3) angeordnet sind.

4. Kernreaktor nach einem der Ansprüche 1 bis 3,
**dadurch gekennzeichnet, dass** jede Trennstelle (8) ein Aufnahmestück (11) am einen Abschnitt (9) des Rohres (6) und eine zugeordnete Überwurfmutter (12) am zugeordneten anderen Abschnitt (10) des Rohres (6) aufweist.

5. Kernreaktor nach Anspruch 4,
**dadurch gekennzeichnet, dass** sich am Aufnahmestück (11) ein plastisch verformbarer Napf (13) befindet, der die Überwurfmutter (12) übergreifend eine Aufdrehsicherung bildet.

6. Kernreaktor nach einem der Ansprüche 4 oder 5,
**dadurch gekennzeichnet, dass** der eine Abschnitt (9) des Rohres (6) mit dem Aufnahmestück (11) verschweißt ist.

7. Kernreaktor nach einem der Ansprüche 4 bis 6,
**dadurch gekennzeichnet, dass** zwischen dem zugeordneten Abschnitt (10) des Rohres (6) und dem Aufnahmestück (11) im Bereich der Überwurfmutter (12) ein Dichtring (14) anbringbar ist.

8. Kernreaktor nach Anspruch 7,
**dadurch gekennzeichnet, dass** zwischen der Überwurfmutter (12) und dem Dichtring (14) eine Distanzhülse (15) anbringbar ist.

9. Kernreaktor nach einem der Ansprüche 4 bis 8,
**dadurch gekennzeichnet, dass** die Überwurfmutter (12) geschlitzt ist.

## Claims

1. Nuclear reactor, in particular pressurized water reactor, with at least one instrumentation finger (5), in which a portion (6A) of a tube (6) is arranged as part of an aeroball measurement system, **characterized in that** the tube (6) has two separating points (7, 8) outside the instrumentation finger (5), so that, of the tube (6), only the portion (6A) is exchangeable.

2. Nuclear reactor according to Claim 1, **characterized in that** the instrumentation finger (5) is exchangeable jointly with the portion (6A) of the tube (6).

3. Nuclear reactor according to one of Claims 1 or 2, the instrumentation finger (5) being held in a lance yoke (3) which is arranged inside a reactor pressure vessel (1), **characterized in that** the separating points (7, 8) are arranged on the lance yoke (3).

4. Nuclear reactor according to one of Claims 1 to 3, **characterized in that** each separating point (8) has a reception piece (11) on one section (9) of the tube (6) and an associated union nut (12) on the associated other section (10) of the tube (6).

5. Nuclear reactor according to Claim 4, **characterized in that** the reception piece (11) has located on it a plastically deformable cup (13) which, engaging over the union nut (12), forms an anti-untwisting device.

6. Nuclear reactor according to one of Claims 4 or 5, **characterized in that** one section (9) of the tube (6) is welded to the reception piece (11).

7. Nuclear reactor according to one of Claims 4 to 6, **characterized in that** a sealing ring (14) is mountable, in the region of the union nut (12), between the associated section (10) of the tube (6) and the reception piece (11).

8. Nuclear reactor according to Claim 7, **characterized in that** a spacer sleeve (15) is mountable between the union nut (12) and the sealing ring (14).

9. Nuclear reactor according to one of Claims 4 to 8, **characterized in that** the union nut (12) is slotted.

## Revendications

1. Réacteur nucléaire, notamment réacteur à eau sous pression, comprenant au moins un doigt (5) de gant d'instrumentation, dans lequel un tronçon (6A) d'un tube (6) est placé en tant que partie d'un système de mesure à bille,
**caractérisé en ce que** le tube (6) a, à l'extérieur du doigt (5) de gant d'instrumentation, deux points (7, 8) de séparation, de sorte que le tronçon (6A) du tube (6) peut être remplacé tout seul.

2. Réacteur nucléaire suivant la revendication 1, **caractérisé en ce que** le doigt (5) de gant d'instrumentation peut être remplacé ensemble avec le tronçon (6A) du tube (6).

3. Réacteur nucléaire suivant la revendication 1 ou la revendication 2, dans lequel le doigt (5) de gant d'instrumentation est maintenu dans une culasse (3) de lance, qui est placée à l'intérieur d'une cuve (1) sous pression d'un réacteur,
**caractérisé en ce que** les points (7, 8) de séparation sont disposés sur la culasse (3) de lance.

4. Réacteur nucléaire suivant les revendications 1 à 3, **caractérisé en ce que** chaque point (8) de séparation comprend une pièce (11) de réception sur un tronçon (9) du tube (6) et un écrou (12) d'accouplement associé sur l'autre tronçon (10) associé du tube (6).

5. Réacteur nucléaire suivant la revendication 4, **caractérisé en ce qu'**il y a sur la pièce (11) de réception un godet (13) déformable plastiquement qui forme une sécurité vis-à-vis de la rotation recouvrant l'écrou (12) d'accouplement.

6. Réacteur nucléaire suivant l'une des revendications 4 ou 5, **caractérisé en ce que** le tronçon (9) du tube (6) est soudé à la pièce (11) de réception.

7. Réacteur nucléaire selon l'une des revendications 4 à 6, **caractérisé en ce que**, entre le tronçon (10) associé du tube (6) et la pièce (11) de réception, un joint (14) d'étanchéité peut être mis dans la zone de l'écrou (12) d'accouplement.

8. Réacteur nucléaire suivant la revendication 7, **caractérisé en ce qu'**une douille (15) d'entretoisement peut être mise entre l'écrou (12) d'accouplement et le joint (14) d'étanchéité.

9. Réacteur nucléaire suivant l'une des revendications 4 à 8, **caractérisé en ce que** l'écrou (12) d'accouplement est fendu.
